# EUROPÄISCHE PATENTSCHRIFT

(11) **EP 0 789 832 B1**
(45) Veröffentlichungstag und Bekanntmachung des Hinweises auf die Patenterteilung: **06.10.1999**
(21) Anmeldenummer: 94931039.5
(22) Anmeldetag: 04.11.1994
(51) Int. Cl.: G01B 11/24, G01N 21/85

(54) **VERFAHREN UND ANORDNUNG ZUR OPTISCHEN INSPEKTION VON PRODUKTEN**
PROCESS AND DEVICE FOR THE OPTICAL INSPECTION OF PRODUCTS
PROCEDE ET DISPOSITIF DE VERIFICATION OPTIQUE DE PRODUITS

(43) Veröffentlichungstag der Anmeldung: 20.08.1997
(73) Patentinhaber: Massen, Robert, Prof. Dr., D-78337 Öhningen (DE)
(72) Erfinder: Massen, Robert, Prof. Dr., D-78337 Öhningen (DE)
(74) Vertreter: Leiser, Gottfried, Dipl.-Ing.
(86) Internationale Anmeldenummer: EP9403621
(87) Internationale Veröffentlichungsnummer: WO9614557

(56) Entgegenhaltungen:
- EP-A- 0 371 650
- EP-A- 0 554 954
- WO-A-94/16290
- DE-A- 4 337 125

## Beschreibung

Die Erfindung betrifft ein Verfahren zur optischen Inspektion von Produkten mit Hilfe der elektronischen Bildverarbeitung, bei welchem die auf einer Auflage einlagig angeordneten Produkte durch das Bildfeld einer Inspektionskamera bewegt werden, die fortlaufend Bilder der Produkte aufnimmt und in ein elektrisches Bildsignal umsetzt, das in einem Bildverarbeitungssystem zur Gewinnung von Qualitätsmerkmalen der Produkte verarbeitet wird. Die Erfindung betrifft ferner eine Anordnung zur Durchführung des Verfahrens.

Ein solches Verfahren ist beispielsweise aus der EP-A-0 554 954 zur Messung der Farbverteilung von Produkten bekannt. Die Produkte, vornehmlich Obst und Gemüse, werden dazu von einer Matrixkamera sukzessive abgetastet, und die so gewonnenen Zeilenbilder der Produktoberfläche werden ausgewertet, um aus der ermittelten Farbverteilung auf die Produktqualität, wie etwa den Reifegrad, zu schließen.

Es werden zahlreiche Produkte visuell auf ihre Qualität hin untersucht. So werden z.B. Kaffeebohnen, Erbsen und Reis auf schlechte Qualität wie Bruchstücke, unreife oder schlecht geschälte Produkte usw. inspiziert. Einige dieser Inspektionsaufgaben können heute bereits automatisch mit Hilfe der elektronischen Bildverarbeitung durchgeführt werden. Ähnliche Inspektionsaufgaben bestehen auch bei der Aussortierung von Tabletten sowie bei der Qualitätskontrolle von Kunststoffgranulaten, Backwaren, Span- und Faserplatten und anderen bei Massenfertigung in großen Mengen anfallenden Produkten. In jedem Fall werden die Produkte vereinzelt oder in einer gewissen Ordnung an einer Reihe von Inspektionskameras vorbeigeführt und aus den Aufnahmen mit Verfahren der automatischen elektronischen Bildverarbeitung Qualitätsmerkmale gewonnen, die die Unterscheidung zwischen guten und schlechten Produkten ermöglichen. Diese Qualitätsmerkmale können Farbmerkmale und Formmerkmale sein.

Die bisher angewendeten Inspektionsverfahren, bei denen die Produkte von oben mit einer Inspektionskamera, die gewöhnlich eine Farbkamera ist, im Auflicht aufgenommen werden, ermöglicht jedoch nicht die Erkennung aller Formmerkmale, die für die vollständige Qualitätsbeurteilung erforderlich sind. So kann insbesondere der Verlauf der Randkonturen der Produkte dann nicht vollständig erkannt werden, wenn sich die Produkte gegenseitig berühren. Es ist daher in der Regel bisher erforderlich, daß die zu inspizierenden Produkte so durch das Bildfeld der Inspektionskamera geführt werden, daß sie sich gegenseitig nicht berühren, damit der Verlauf des Randes klar gegenüber dem Hintergrund erkennbar und damit automatisch bestimmbar ist. Nur so können Formmerkmale wie Bruchstücke, abgeplatzte Ecken etc. erkannt werden. Da bei allen diesen Aufgabenstellungen große Mengen von Produkten (typischerweise 4000 bis 15000 Stück pro Sekunde) inspiziert werden müssen, stellt sich eine solche Vereinzelung insbesondere von Produkten, die in einem Schüttstrom zugeführt werden, als eine mechanisch äußerst schwierig durchzuführende Aufgabe dar. Die Führung soll in der Regel mit einer definierten Geschwindigkeit erfolgen, damit die Aussortierung der schlechten Produkte mit Hilfe von Ejektoren zeitrichtig erfolgen kann. Die mechanische Vereinzelung der Produkte zur Bildung eines Stroms einzeln oder nebeneinander geführter Produkte, die sich gegenseitig nicht berühren, ist daher die hauptsächliche Ursache für die Mengenbeschränkung bei der Realisierung automatischer Systeme für die optische Qualitätskontrolle.

Bei der automatischen optischen Klassifikation von Pflanzen ist es bekannt, zusätzlich zu einer mittels einer Inspektionskamera durchgeführten Qualitätskontrolle die Höhe der Pflanze durch ein bildgebendes Triangulationssystem zu bestimmen. Das bildgebende Triangulationssystem enthält in diesem Fall zwei Videokameras, die zwei Stereobilder der Pflanze aufnehmen, aus denen das Bildverarbeitungssystem die Höhe der Pflanze berechnet. Diese Verfahren ist einerseits sehr aufwendig und andererseits zu langsam für die Inspektion von Massengütern, die mit großem Durchsatz inspiziert werden müssen.

Aufgabe der Erfindung ist daher die Schaffung eines Verfahrens und einer Anordnung für die automatische optische Qualitätskontrolle von Produkten mit Hilfe der elektronischen Bildverarbeitung, die mit geringem Aufwand und großer Geschwindigkeit die Erfassung von höhenabhängigen Formmerkmalen der Produkte ermöglicht.

Zur Lösung dieser Aufgabe ist ein Verfahren der eingangs angegebenen Art nach der Erfindung dadurch gekennzeichnet, daß durch ein bildgebendes Triangulationssystem ein Höhenbild der Produkte erfaßt und in ein elektrisches Höhenbildsignal umgesetzt wird, das in dem Bildverarbeitungssystem zur Bestimmung von höhenabhängigen Formmerkmalen der Produkte verarbeitet wird, daß zur Gewinnung eines fortlaufenden Höhenbildes eine Lichtkante auf die Produkte quer zur Bewegungsrichtung projiziert wird, daß das Bild der Lichtkante und wenigstens eines Teils der von der Lichtkante begrenzten Lichtfläche von einer Triangulations-Zeilenkamera unter einem Winkel zur Projektionsrichtung erfaßt wird, und daß die optische Abbildung der Lichtkante auf die Sensorelemente der Triangulations-Zeilenkamera so erfolgt, daß im gesamten vorkommenden Höhenbereich der Produkte das Bild der Lichtkante auf den Sensorelementen liegt und ein von der lokalen Produkthöhe abhängiger Anteil jedes Sensorelements durch die von der Lichtkante begrenzte Lichtfläche beleuchtet wird.

Die Erfindung ermöglicht die Erfassung von höhenabhängigen Formmerkmalen mit sehr einfachen Mitteln, da außer einem Projektor, der die Lichtkante auf die Produkte projiziert, nur eine sehr einfach aufgebaute Kamera benötigt wird, die als Bildwandler lediglich einen Zeilensensor handelsüblicher Art enthält. Durch die besondere Art der Projektion der Lichtkante auf die Sensorelemente des Zeilensensors wird erreicht, daß die Amplituden der analogen Ausgangssignale der Sensorelemente in Beziehung zu der lokalen Produkthöhe an den den Sensorelementen zugeordneten Punkten stehen, so daß diese analogen Ausgangssignale in ihrer Gesamtheit ein Höhenbildsignal ergeben, das zeilenweise einem Höhenbild entspricht, in welchem die Höhen der Produkte durch Grauwerte dargestellt sind. Aus diesem Höhenbildsignal kann daher das Bildverarbeitungssystem schnell und einfach die gewünschten höhenabhängigen Formmerkmale ableiten.

Zu den höhenabhängigen Formmerkmalen, die aus dem Höhenbild gewonnen werden können, gehören insbesondere die Randkonturen von Produkten mit unebener Oberseite, insbesondere von körnigen Produkten; diese Randkonturen sind in dem Höhenbild auch dann erkennbar, wenn sich die Produkte gegenseitig berühren. Eine mechanische Vereinzelung der Produkte in der Weise, daß sie sich gegenseitig nicht mehr berühren, ist daher nicht erforderlich. Die nach wie vor erforderliche Bildung eines einlagigen Stroms von Produkten, die sich gegenseitig berühren dürfen, ist viel einfacher, kostengünstiger und schneller zu gestalten. Dadurch läßt sich der Massendurchsatz an Produkten bei der automatischen Qualitätskontrolle mit geringem Aufwand beträchtlich erhöhen.

Weitere höhenabhängige Formmerkmale, die aus dem Höhenbild gewonnen werden können, sind Löcher und Vertiefungen in der Oberseite der Produkte, beispielsweise in Span- oder Faserplatten, sowie die Dicke der Produkte.

Eine Anordnung zur Durchführung dieses Verfahrens mit einer Auflage, auf der die zu inspizierenden Produkte einlagig angeordnet sind, einer Inspektionskamera zur Aufnahme von Bildern der Produkte, wenn diese auf der Auflage relativ zur Inspektionskamera gefördert werden, und zur Umsetzung der aufgenommen Bilder in ein elektrisches Bildsignal, einem Bildverarbeitungssystem, das das elektrische Bildsignal von der Inspektionskamera empfängt und dieses zur Gewinnung von Qualitätsmerkmalen der Produkte verarbeitet, und mit einem bildgebenden Triangulationssystem, das Höhenbilder der Produkte erfaßt und diese in ein elektrisches Höhenbildsignal umsetzt, die dem Bildverarbeitungssystem zugeführt werden, das so ausgebildet ist, daß es das Höhenbildsignal zur Bestimmung von höhenabhängigen Formmerkmalen der Produkte verarbeitet, ist nach der Erfindung dadurch gekennzeichnet, daß das Triangulationssystem einen Projektor enthält, der eine Lichtkante quer zur Förderrichtung auf die Produkte projiziert, sowie eine Triangulations-Zeilenkamera mit den Bildpunkten einer Bildzeile zugeordneten Sensorelementen, die die Lichtkante sowie wenigstens einen Teil der von der Lichtkante begrenzten Lichtfläche unter einem Winkel zur Projektionsrichtung aufnimmt, wobei die Lichtkante auf die Sensorelemente so abgebildet wird, daß ein von der lokalen Produkthöhe abhängiger Anteil jedes Sensorelements durch die von der Lichtkante begrenzte Lichtfläche beleuchtet wird.

Vorteilhafte Ausgestaltungen und Weiterbildungen des Verfahrens und der Anordnung nach der Erfindung sind in den Unteransprüchen gekennzeichnet.

Weitere Merkmale und Vorteile der Erfindung ergeben sich aus der folgenden Beschreibung von Ausführungsbeispielen an Han der Zeichnungen. In den Zeichnungen zeigen:
- Fig. 1: eine schematische Darstellung zur Erläuterung des Prinzips der automatischen optischen Qualitätskontrolle von Produkten mit Hilfe der elektronischen Bildverarbeitung,
- Fig. 2: ein mit Hilfe der Anordung von Fig. 1 aufgenommenes Bild eines Stroms von Produkten, die sich zum Teil gegenseitig berühren,
- Fig. 3: eine schematische Darstellung eines Ausführungsbeispiels der Anordnung nach der Erfindung,
- Fig. 4: eine Draufsicht auf den Produktstrom und die darauf projizierte Lichtkante bei der Anordnung von Fig. 3,
- Fig. 5: das mit Hilfe des bildgebenden Triangulationsystems in der Anordnung von Fig. 3 aufgenommene Bild,
- Fig. 6: die in der Anordnung von Fig. 3 erhaltenen Höhenkurven der Produkte,
- Fig. 7: ein Schema zur Erläuterung der Umsetzung der Produkthöhen in Grauwerte,
- Fig. 8: einen zur Verwendung als Triangulations-Zeilenkamera geeigneten Zeilensensor,
- Fig. 9: ein Schema zur Erläuterung der Funktionsweise des Zeilensensors von Fig. 8 bei großer Produkthöhe,
- Fig. 10: ein Schema zur Erläuterung der Funktionsweise des Zeilensensors von Fig. 8 bei geringer Produkthöhe und
- Fig. 11: eine schematische Darstellung eines anderen Ausführungsbeispiels der Anordnung nach der Erfindung.

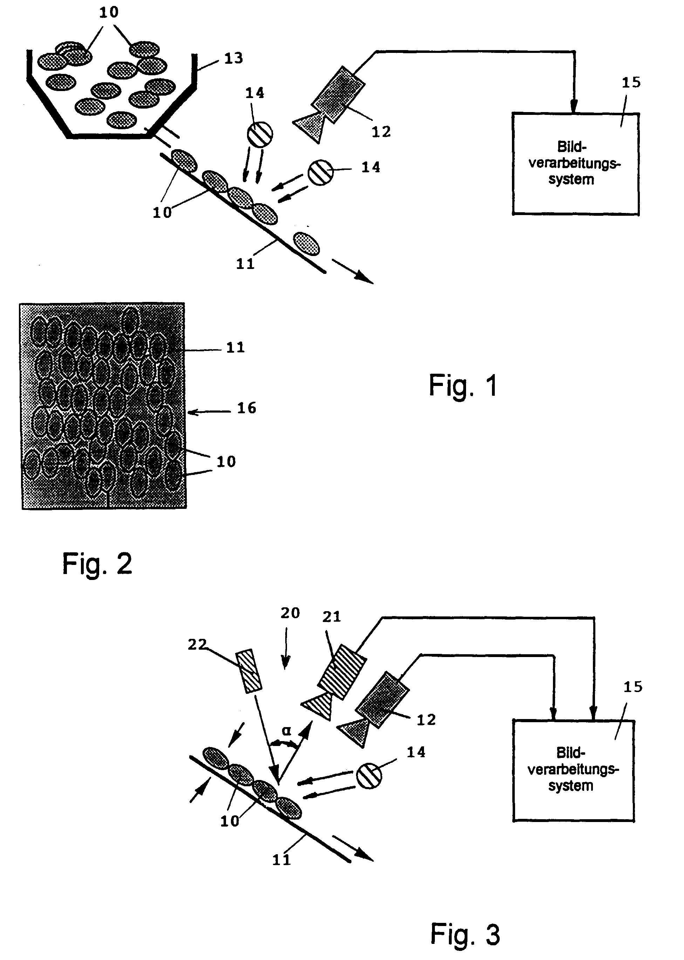

Fig. 1 zeigt schematisch das Prinzip der automatischen optischen Inspektion von Produkten mit Hilfe der elektronischen Bildverarbeitung. Hierzu werden die Produkte 10 einlagig auf eine Auflage 11 aufgebracht, auf der sie sich durch das Bildfeld einer Inspektionskamera 12 bewegen, deren Aufnahmerichtung im wesentlichen senkrecht zur Ebene der Auflage 11 gerichtet ist. Die Produkte 10 können beliebige Massengüter von vergleichbarer Form und Größe sein; als Beispiel ist angenommen, daß es sich um körnige Produkte handelt, beispielsweise Reiskörner, die im Schüttstrom durch ein Rohr oder einen Trichter 13 zugeführt weren. Die Auflage 11 ist im dargestellten Beispiel eine Rutsche, doch könnte sie auch durch ein Förderband oder eine andere Fördereinrichtung bekannter Art gebildet sein, die geeignet ist, die Produkte einlagig durch das Bildfeld der Inspektionskamera 12 zu fördern.

Die Inspektionskamera 12 kann eine Farbvideokamera sein, die periodisch flächenhafte Bilder eines Abschnitts der Auflage 11 mit den darauf befindlichen Produkten 10 aufnimmt, oder eine Farb-Zeilenkamera, die in ständiger Wiederholung jeweils eine quer zur Förderrichtung verlaufende Bildzeile aufnimmt, wobei sich die nacheinander aufgenommenen Bildzeilen infolge der Bewegung der Produkte 10 relativ zur Inspektionskamera 12 zu einem flächenhaften Bild zusammenfügen. Die Aufnahme erfolgt im Auflicht, das beispielsweise durch Lichtquellen 14 erzeugt wird.

Die Inspektionskamera 12 setzt die aufgenommenen Bilder oder Bildzeilen in elektrische Bildsignale um, die einem elektronischen Bildverarbeitungssystem 15 zugeführt werden, das nach den bekannten Verfahren der elektronischen Bildverarbeitung mit Hilfe dieser Bildsignale gewisse Qualitätsmerkmale der Produkte ermittelt. Hierzu werden die Bildsignale vorzugsweise bildpunktweise digitalisiert, und das dadurch gewonnene digitalisierte Videobild wird in einem Bildspeicher abgelegt und mit Hilfe eines Bildrechners verarbeitet.

Fig. 2 zeigt schematisch das Bild 16 der Produkte 10 auf der Auflage 11, wie es sich der Inspektionskamera 12 darbietet. Die einzelnen Produkte berühren sich teilweise, so daß es in dem von der Inspektionskamera 12 von oben im Auflicht aufgenommenen Bild nicht möglich ist, die vollständige Randkontur jedes Produkts als Kontrast zu dem von der Auflage 11 gebildeten Hintergrund zu erkennen.

Fig. 3 zeigt wieder die Auflage 11 mit den darauf befindlichen Produkten 10 sowie die Inspektionskamera 12, die Lichtquelle 14 und das Bildverarbeitungssystem 15 von Fig. 1. Zusätzlich ist ein bildgebendes Triangulationssystem 20 vorgesehen, das eine Triangulationskamera 21 und einen Projektor 22 enthält. Die Aufnahmerichtung der Triangulationskamera 21 ist gleichfalls etwa senkrecht zur Ebene der Auflage 11 gerichtet. Der Projektor 22 projiziert eine Lichtkante, die quer zur Förderrichtung verläuft, unter einem spitzen Winkel zur Auflage 11 auf die darauf befindlichen Produkte 10, so daß sich diese Lichtkante in dem von der Triangulationskamera 21 erfaßten Bereich befindet. Zwischen der Projektionsrichtung und der Aufnahmerichtung der Triangulationskamera 21 besteht somit ein Parallaxe-Winkel α.

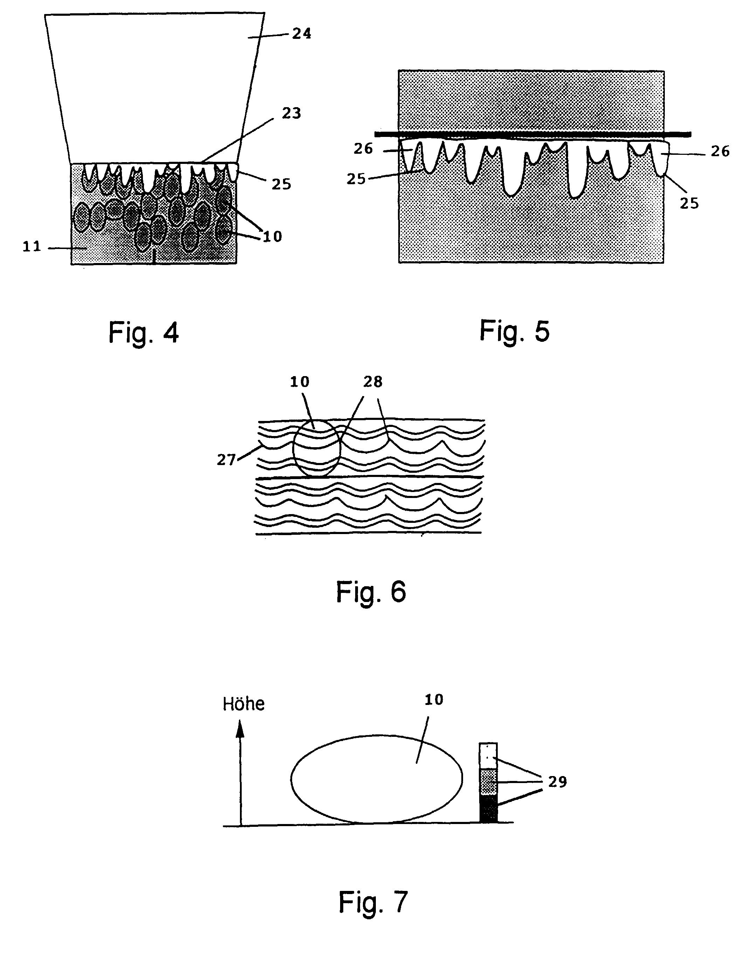

Eine Lichtkante ist die Grenzlinie zwischen einer vom Projektor 22 projizierten Lichtfläche und der normalen Beleuchtung, die beispielsweise von der Lichtquelle 14 stammt. Fig. 4 zeigt die Auswirkung der von den Produkten 10 gebildeten Unebenheiten auf eine an sich geradlinige Lichtkante 23, die eine Lichtfläche 24 begrenzt, die vom Projektor 22 auf die Produkte 10 projiziert wird. Infolge der schrägen Projektion erteilt der Höhenverlauf der Produkte 10 der Lichtkante einen kurvenförmigen Verlauf 25, wobei die Auslenkung von der geraden Lichtkante 23 an jeder Stelle von der Höhe des Produkts 10 bezogen auf die als Referenzebene geltende Auflage 11 abhängig ist. Die projizierte Lichtfläche 24 folgt diesem kurvenförmigen Verlauf der Lichtkante, wie aus Fig. 4 zu ersehen ist. Der kurvenförmige Verlauf 25 der Lichtkante ändert sich infolge der Bewegung der Produkte 10 ständig entsprechend dem sich ändernden Höhenverlauf der Produkte.

Die Triangulationskamera 21 ist so ausgebildet, daß sie nur auf die von der Lichtkante erzeugten Helligkeitsunterschiede anspricht. Eine vorteilhafte Ausführungsform besteht darin, daß die Projektion der Lichtkante in einem bestimmten Frequenzbereich erfolgt und daß die Triangulationskamera 21 so ausgebildet ist, daß sie nur auf das Licht dieses Frequenzbereichs anspricht. Das von der Triangulationskamera 21 aufgenommene Bild hat dann etwa das in Fig. 5 dargestellte Aussehen. Es enthält nur die kurvenförmige Lichtkante 25 und die davon umschlossenen Ausläufer 26 der Lichtfläche 24. Diese Bild wird von der Triangulationskamera 21 in ein elektrisches Analogsignal umgewandelt, dessen Amplitude für jeden Bildpunkt von der Höhe des Produkts an der betreffenden Stelle abhängt und das gleichfalls dem Bildverarbeitungssystem 15 zugeführt wird.

Durch die fortlaufende Aufnahme der Lichtkante bei dem bewegten Strom der Produkte 10 entsteht dann gemäß Fig. 6 eine Folge von Höhenkurven 27, in der sich die Ränder der Produkte 10 als Kanten 28 abbilden. Der Verlauf jeder Höhenkurve 27 kann in einem im Bildverarbeitungssystem 15 enthaltenen Bildspeicher Bildpunkt für Bildpunkt als ein sogenanntes Höhenbild abgelegt werden, in dem jedem Bildpunkt ein Grauwert zugeordnet ist, welcher proportional zu der lokalen Höhe, bezogen auf die Referenzebene, ist. Fig. 7 zeigt vereinfacht drei Grauwerte 29, die drei verschiedenen Höhenbereichen eines Produkts 10 zugeordnet sind. In Wirklichkeit ist natürlich die Anzahl der Grauwertstufen sehr viel größer; beispielsweise können 2⁸ = 256 Grauwerte für den gesamten Höhenbereich der Produkte vorgesehen sein. In dem Höhenbild besteht dann ein praktisch stetiger Übergang zwischen den hellsten Stellen, die der größten Höhe entsprechen, und den dunkelsten Stellen, die der geringsten Höhe entsprechen. Aneinanderstoßende Kanten, zu denen die Höhen von beiden Seiten her abfallen, erscheinen daher als die dunkelsten linienförmigen Stellen zwischen dunkler werdenden Flächen, vergleichbar den Kanten 28 in Fig. 6. An diesem Höhenbild können die Randkonturen der Produkte 10 mit den bekannten Verfahren der zweidimensionalen Kantenextraktion, wie Sobel- oder Laplace-Operator, ermittelt werden. Auch andere höhenabhängige Formmerkmale, wie Vertiefungen oder Unregelmäßigkeiten an der Oberseite der Produkte, erscheinen in dem Höhenbild durch ihre unterschiedlichen Grauwerte und in dem zugehörigen Höhenbildsignal durch unterschiedliche Amplituden.

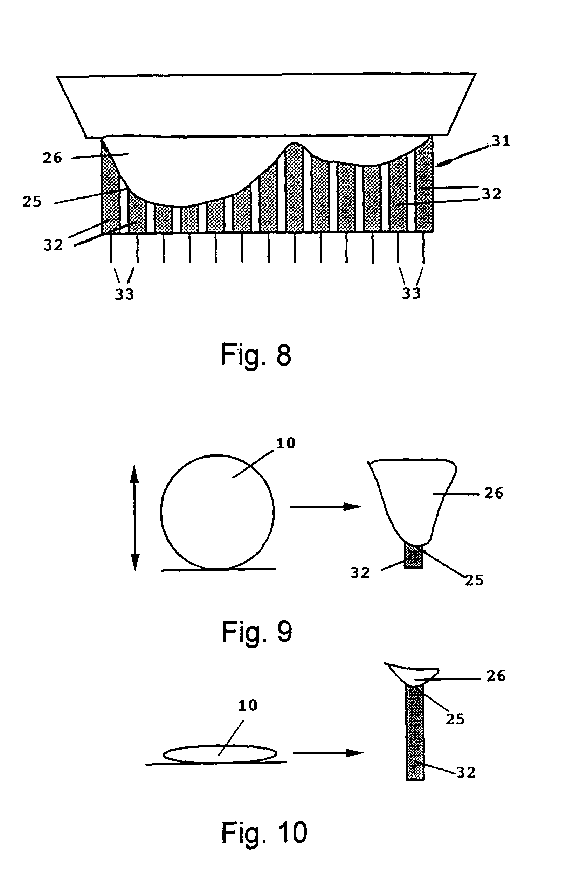

Je größer die Fördergeschwindigkeit der Produkte 10 ist, desto schneller muß das Höhenbild erstellt werden, damit es in Echtzeit zur Verfügung steht. Eine schnelle Erstellung des Höhenbildes mit geringem Aufwand wird bei der beschriebenen Anordnung dadurch erreicht, daß für die Triangulationskamera 21 eine Zeilenkamera in besonderer Weise verwendet wird. Gemäß einem bevorzugten Ausführungsbeispiel enthält die Triangulations-Zeilenkamera 21 einen Zeilensensor 31 der in Fig. 8 dargestellten Art, der eine lineare Anordnung von Sensorelementen 32 aufweist, die durch ein großes Verhältnis von Länge zu Breite ausgezeichnet sind. Solche Zeilensensoren werden z.B. in der optischen Spektroskopie angewendet, und ihre Sensorelemente können typische Dimensionen von 21 µm Breite zu 2 mm Länge aufweisen. Das Bild der verformten Lichtkante 25 wird über eine geeignete Optik so auf die Sensorelemente 32 abgebildet, daß es im gesamten Bereich der vorkommenden Höhen der Produkte 10 auf den Sensorelementen 32 liegt. Bei maximaler Höhe des Produkts 10, die in Fig. 9 dargestellt ist, liegt das Bild der Lichtkante 25 nahe dem einen Ende des Sensorelements 32, so daß nahezu das gesamte Sensorelement 32 dem Licht der von der Lichtkante begrenzten Lichtfläche 26 ausgesetzt ist. Bei geringer Höhe des Produkts 10, die in Fig. 10 dargestellt ist, liegt das Bild der Lichtkante 25 nahe dem anderen Ende des Sensorelements 32, so daß nur ein kleiner Teil des Sensorelements 31 dem Licht der von der Lichtkante 25 begrenzten Lichtfläche 26 ausgesetzt ist. Hierdurch wird erreicht, daß jedes Sensorelement 32 eine Lichtmenge empfängt, die proportional zur Höhe des Produkts ist. Am Ausgang 33 jedes Sensorelements 32 wird somit ein analoges Ausgangssignal erhalten, dessen Amplitude in eindeutiger Beziehung zu der Höhe des Produkts an der dem Sensorelement zugeordneten Stelle steht. Die Gesamtheit der Ausgangssignale aller Sensorelemente 32 stellt somit jeweils eine Bildzeile eines Höhenbildes dar. Durch geeignete Umrechnung kann erreicht werden, das die Amplituden des Höhenbildsignals den Höhen der Produkte 10 über der Auflage 11 direkt proportional sind. Die für jeden Bildpunkt gleiche Umrechnungsfunktion entsprechend der Triangulationsgleichung kann über eine analoge Funktionseinheit gebildet werden, oder nach Digitalisierung der Ausgangssignale des Zeilensensors 31 über eine Speichertabelle, die mit den durchzuführenden Rechenfunktionen belegt ist und von dem digitalisierten Höhenbildsignal adressiert wird. Ein aus dem Höhenbildsignal gebildetes Grauwertbild stellt dann unmittelbar ein Höhenbild der Produkte dar.

Die Abbildung der Lichtkante 25 und des davon begrenzten Teils der Lichtfläche 24 auf den Zeilensensor 31 von Fig. 8 kann wegen der im Vergleich zur Breite großen Länge der Sensorelemente 32 durch eine übliche, nicht verzerrende Optik erfolgen. Das Höhenbild kann jedoch auch mit Zeilensensoren erfaßt werden, deren Sensorelemente ein sehr viel kleineres Verhältnis von Länge zu Breite haben, beispielsweise mit quadratischen Sensorelementen, wenn die optische Abbildung durch eine anamorphotische Optik erfolgt, die das Bild der Lichtkante und des davon begrenzten Teils der Lichtfläche so verzerrt, daß es im gesamten vorkommenden Höhenbereich in den Längenbereich der Sensorelemente paßt. Eine solche anamorphotische Optik kann z.B. durch zwei gekreuzte Zylinderlinsen nach dem Fachmann bekannten Berechnungsverfahren so konstruiert werden, daß sie ein rechteckiges Bildfeld im Objektraum in ein quadratisches Bildfeld auf der Sensorebene überführt. Wenn das rechteckige Bildfeld demjenigen entspricht, welches bei dem Zeilensensor von Fig. 8 von der rechteckigen Fläche eines Sensorelements 32 eingenommen wird, so erhalten die nunmehr quadratischen Sensorelemente ebenfalls umso mehr Licht, je weiter sich die Lichtkante über das rechteckige Bildfeld verchiebt. Das Ausgangssignal einer Triangulations-Zeilenkamera mit quadratischen Sensorelementen entspricht dann in gleicher Weise dem Höhenverlauf der von der Lichtkante erfaßten Produkte wie das Ausgangssignal der Triangulations-Zeilenkamera von Fig. 8 bei nicht verzerrender Abbildung.

Diese anamorphotische Abbildung kann ganz allgemein so ausgelegt werden, daß sie ein Bildfeld mit einem bestimmten Länge/Breite-Verhältnis in ein Bildfeld mit einem beliebigen anderen Länge/Breite-Verhältnis abbildet. Dadurch läßt sich das beschrieben Verfahren mit Zeilensensoren durchführen, deren Sensorelemente ein beliebiges Länge/Breite-Verhältnis haben.

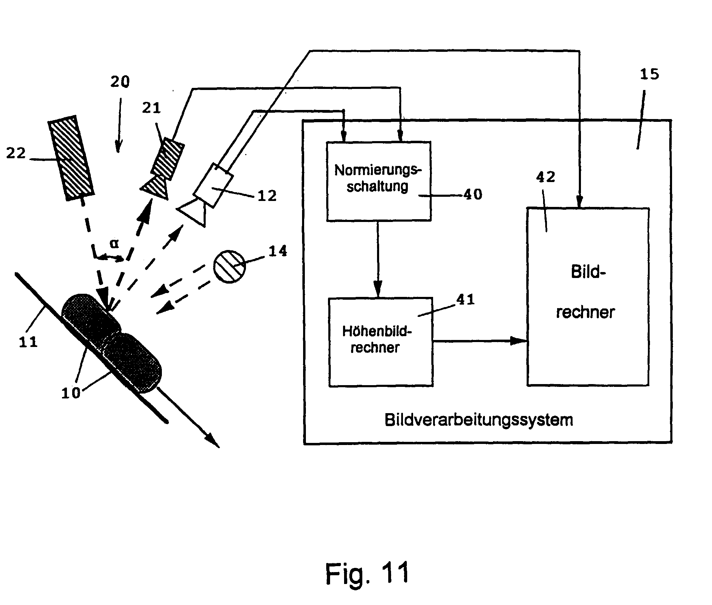

Das so erzeugte Höhenbild ist nicht nur von der Position der Lichtkante 25 abhängig, sondern unerwünschterweise auch vom Reflexionsgrad, d.h. von der vom Produkt 10 reflektierten Lichtmenge bzw. von der Grundhelligkeit der Produkte 10. Mit der in Fig. 11 dargestellten Ausführungsform wird diese Abhängigkeit dadurch eliminiert, daß aus den Bildsignalen der Inspektionskamera 12 die Helligkeit der von der Triangulations-Zeilenkamera 21 erfaßten Bildpunkte entnommen wird und damit die Bildsignale der Triangulations-Zeilenkamera 21 durch Division oder eine ähnliche geeignete Korrekturfunktion normiert werden. Hierzu wird die Lichtkante vom Projektor 22 auf die gleiche Stelle projiziert, die auch von der Inspektionskamera 12 erfaßt wird. Um den örtlichen Zusammenhang zwischen den von der Inspektionskamera 12 erfaßten Bildpunkten und den von der Triangulations-Zeilenkamera 21 erfaßten Bildpunkten leichter herzustellen, wird vorzugsweise für die Projektion der Lichtkante mittels des Projektors 22 ein Wellenlängenbereich ausgewählt, für welchen nur die Triangulations-Zeilenkamera 21, nicht aber die Inspektionskamera 12 empfindlich ist. Ein solcher Wellenlängenbereich kann z.B. der nahe Infrarotbereich (NIR) sein. Die Triangulations-Zeilenkamera 21 empfängt das Licht der aufprojizierten Lichtkante über ein optisches Filter, das nur diesen Wellenlängenbereich durchläßt. Für die Inspektionskamera 12 wird im allgemeinen eine Farbkamera eingesetzt, die konstruktionsbedingt für diesen Wellenlängenbereich nicht empfindlich ist. Vorzugsweise werden die Strahlengänge der Inspektionskamera 12 und der Triangulations-Zeilenkamera 21 über einen Strahlenteiler zusammengefaßt, so daß die optische Ausrichtung auf die gleiche Objektzeile mechanisch fixiert ist.

Fig. 11 zeigt auch schematisch die Ausbildung des Bildverarbeitungssystems 15 für diesen Fall. Die Ausgangssignale der Inspektionskamera 12 und der Triangulations-Zeilenkamera 21 werden einer Normierungsschaltung 40 zugeführt, in der die Ausgangssignale der Triangulations-Zeilenkamera 21 nach Digitalisierung so normiert werden, daß in dem sich anschließenden Höhenbildrechner 41 ein Höhenbild entsteht, das nicht mehr von der Helligkeit der Produkte 10 abhängig ist. Durch eindimensionale oder zweidimensionale Kantenextraktion können aus dem Höhenbild im Höhenbildrechner 41 die Randkonturen der Produkte ermittelt und zu einem Bildrechner 42 übertragen werden, der zugleich die Bildsignale von der Inspektionskamera 12 empfängt. Im Bildrechner 42 wird das von der Inspektionskamera 12 gelieferte eigentliche Farbbild jedes Produkts mit der vom Höhenbildrechner 41 ermittelten Randkontur des Produkts so ausmaskiert, das es an den der Randkontur entsprechenden Bildpunkten Signalwerte erhält, die die Randkonturen eindeutig erkennen lassen. Damit steht dem Bildrechner 42 ein Farbbild zur Verfügung, in dem die Ränder der Produkte 10 klar erkennbar sind, obgleich sie sich in dem von der Inspektionskamera 12 aufgenommenen Farbbild infolge der gegenseitigen Berührung nicht auszeichnen. Das auf diese Weise im Bildrechner 42 erhaltene Farbbild kann daher zur Gewinnung von Qualitätsmerkmalen mit den gleichen Methoden der elektronischen Bildverarbeitung weiterverarbeitet werden wie ein Farbbild, das von einem Strom vereinzelter, also sich nicht berührender Produkte stammt, in dem sich alle Randkonturen vollständig gegenüber dem Hintergrund klar abzeichnen.

In entsprechender Weise können im Höhenbildrechner 41 andere höhenabhängige Formmerkmale der Produkte, wie Löcher und Vertiefungen in der Oberseite der Produkte sowie die Dicke der Produkte, aus dem Höhenbild ermittelt und zum Bildrechner 42 übertragen werden, in dem sie dann als Qualitätsmerkmale für die Qualitätsbeurteilung der Produkte verwendet werden.

Eine Abänderung des zuvor beschriebenen Ausführungsbeispiels besteht darin, daß eine einzige Zeilenkamera abwechselnd als Inspektionskamera und als Triangulations-Zeilenkamera verwendet wird, wobei die Lichtkante immer nur in den Zeitintervallen aufprojiziert wird, in denen die Zeilenkamera zur Triangulation verwendet wird. Hierzu wird die Projektion der Lichtkante in schnellem Wechsel ein- und ausgeschaltet, und das Ausgangssignal der Zeilenkamera wird nur bei ausgeschalteter Projektion als Bildsignal für die Oberflächeninspektion verwendet, während das Höhenbild nur bei eingeschalteter Projektion aus dem Ausgangssignal der Zeilenkamera berechnet wird.

Anstatt die zu inspizierenden Produkte in einem Strom durch die Erfassungsbereiche von feststehenden Kameras zu führen, wäre es auch möglich, die Kameras relativ zu einer ruhenden Produktmenge zu bewegen; für das beschriebene Verfahren ist es nur wesentlich, daß eine Relativbewegung zwischen den Produkten und den Kameras stattfindet. Für Massenprodukte, die in großen Mengen anfallen, bietet sich jedoch die Förderung in einem Produktstrom an, der bei den meisten Herstellungs- oder Bearbeitungsverfahren ohnehin vorliegt.

## Patentansprüche

1. Verfahren zur optischen Inspektion von Produkten (10) mit Hilfe der elektronischen Bildverarbeitung, bei welchem die auf einer Auflage (11) einlagig angeordneten Produkte (10) durch das Bildfeld einer Inspektionskamera (12) bewegt werden, die fortlaufend Bilder (16) der Produkte (10) aufnimmt und in ein elektrisches Bildsignal umsetzt, das in einem Bildverarbeitungssystem (15) zur Gewinnung von Qualitätsmerkmalen der Produkte (10) verarbeitet wird, dadurch gekennzeichnet, daß durch ein bildgebendes Triangulationssystem (20) ein Höhenbild der Produkte (10) erfaßt und in ein elektrisches Höhenbildsignal umgesetzt wird, das in dem Bildverarbeitungssystem (15) zur Bestimmung von höhenabhängigen Formmerkmalen der Produkte (10) verarbeitet wird, daß zur Gewinnung eines fortlaufenden Höhenbildes eine Lichtkante (23) auf die Produkte (10) quer zur Bewegungsrichtung projiziert wird, daß das Bild der Lichtkante (23) und wenigstens eines Teils der von der Lichtkante (23) begrenzten Lichtfläche (24) von einer Triangulations-Zeilenkamera (21) unter einem Winkel zur Projektionsrichtung erfaßt wird, und daß die optische Abbildung der Lichtkante (23) auf die Sensorelemente (32) der Triangulations-Zeilenkamera (21) so erfolgt, daß im gesamten vorkommenden Höhenbereich der Produkte (10) das Bild der Lichtkante (23) auf den Sensorelementen (32) liegt und ein von der lokalen Produkthöhe abhängiger Anteil jedes Sensorelements (32) durch die von der Lichtkante (23) begrenzte Lichtfläche (24) beleuchtet wird.

2. Verfahren nach Anspruch 1, dadurch gekennzeichnet, daß bei Verwendung einer Triangulations-Zeilenkamera (21), deren Sensorelemente (32) ein großes Verhältnis von Länge zu Breite aufweisen, die optische Abbildung verzerrungsfrei erfolgt.

3. Verfahren nach Anspruch 1, dadurch gekennzeichnet, daß die optische Abbildung anamorphotisch erfolgt.

4. Verfahren nach einem der Ansprüche 1 bis 3, dadurch gekennzeichnet, daß zur Projektion der Lichtkante (23) ein Wellenlängenbereich verwendet wird, für welchen nur die Triangulations-Zeilenkamera (21) empfindlich ist, nicht aber die zur Inspektion der Produktoberfläche eingesetzte Inspektionskamera (12).

5. Verfahren nach Anspruch 4, dadurch gekennzeichnet, daß zur Projektion der Lichtkante (23) ein Wellenlängenbereich im Gebiet des nahen Infrarot verwendet wird.

6. Verfahren nach einem der vorhergehenden Ansprüche, dadurch gekennzeichnet, daß die optischen Strahlengänge der Triangulationskamera (21) und der Inspektionskamera (12) so ausgerichtet sind, daß beide Kameras denselben Bereich der Produktoberfläche erfassen.

7. Verfahren nach Anspruch 8, dadurch gekennzeichnet, daß das Bild des gleichen Bereichs der Produktoberfläche durch optische Strahlteiler auf die beiden Kameras aufgeteilt wird.

8. Verfahren nach einem der vorhergehenden Ansprüche, dadurch gekennzeichnet, daß das von der Triangulations-Zeilenkamera (21) gelieferte Höhenbildsignal durch eine Recheneinheit (41) entsprechend den Triangulationsparametern Bildpunkt für Bildpunkt so umgerechnet wird, daß die Signalamplitude direkt proportional zur geometrischen Höhe des Produkts (10) bezogen auf die Auflage (11) ist.

9. Verfahren nach Anspruch 8, dadurch gekennzeichnet, daß die Recheneinheit (41) durch eine Speichertabelle gebildet ist, welche mit den durchzuführenden Rechenfunktionen belegt ist und von den digitalisierten Höhenbildsignalen adressiert wird.

10. Verfahren nach einem der vorhergehenden Ansprüche, dadurch gekennzeichnet, daß durch eine Recheneinheit (40), welche die Ausgangssignale der Inspektionskamera (12) und der Triangulations-Zeilenkamera (21) empfängt, das Höhenbildsignal der Triangulations-Zeilenkamera (21) mit Hilfe des Helligkeitssignals der Inspektionskamera (12) so normiert wird, daß der Einfluß der Helligkeit der Produktoberfläche auf das Höhenbild kompensiert wird.

11. Verfahren nach einem der vorhergehenden Ansprüche, dadurch gekennzeichnet, daß aus dem Höhenbild mit Hilfe bekannter Verfahren der Kantenextraktion aus Grauwertbildern die Randkonturen der einzelnen, sich zumindest teilweise berührenden Produkte (10) bestimmt werden.

12. Verfahren nach Anspruch 11, dadurch gekennzeichnet, daß das von der Inspektionskamera (12) gelieferte Bild jedes Produkts (10) mit der ermittelten Randkontur des Produkts (10) so ausmaskiert wird, daß es an den der Randkontur entsprechenden Bildpunkten Signalwerte erhält, die die Randkonturen eindeutig erkennen lassen.

13. Verfahren nach einem der vorhergehenden Ansprüche, dadurch gekennzeichnet, daß aus dem Höhenbild Vertiefungen und/oder Löcher in den Oberseiten der Produkte (10) ermittelt werden.

14. Verfahren nach einem der vorhergehenden Ansprüche, dadurch gekennzeichnet, daß aus dem Höhenbild die Dicke jedes Produkts (10) ermittelt wird.

15. Verfahren nach einem der vorhergehenden Ansprüche, dadurch gekennzeichnet, daß die gleiche Kamera zur Inspektion und zur Triangulation verwendet wird, daß die Projektion der Lichtkante (23) in schnellem Wechsel ein- und ausgeschaltet wird, daß das Ausgangssignal der Kamera nur bei ausgeschalteter Projektion als Bildsignal für die Oberflächeninspektion verwendet wird, und daß das Höhenbild nur bei eingeschalteter Projektion aus dem Ausgangssignal der Kamera berechnet wird.

16. Anordnung zur Durchführung des Verfahrens nach einem der Ansprüche 1 bis 15, mit einer Auflage (11), auf der die zu inspizierenden Produkte (10) einlagig angeordnet sind, einer Inspektionskamera (12) zur Aufnahme von Bildern (16) der Produkte (10), wenn diese auf der Auflage (11) relativ zur Inspektionskamera (12) gefördert werden, und zur Umsetzung der aufgenommen Bilder (16) in ein elektrisches Bildsignal, einem Bildverarbeitungssystem (15), das das elektrische Bildsignal von der Inspektionskamera (12) empfängt und dieses zur Gewinnung von Qualitätsmerkmalen der Produkte (10) verarbeitet, dadurch gekennzeichnet, daß ein bildgebenden Triangulationssystem (20) vorhanden ist, das im Verwendungsfall Höhenbilder der Produkte (10) erfaßt und diese in ein elektrisches Höhenbildsignal umsetzt, die dem Bildverarbeitungssystem (15) zugeführt werden, das so ausgebildet ist, daß es das Höhenbildsignal zur Bestimmung von höhenabhängigen Formmerkmalen der Produkte (10) verarbeitet, daß das Triangulationssystem (20) einen Projektor (22) enthält, der im Verwendungsfall eine Lichtkante (23) quer zur Förderrichtung auf die Produkte (10) projiziert, sowie eine Triangulations-Zeilenkamera (21) mit den Bildpunkten einer Bildzeile zugeordneten Sensorelementen (32), die die Lichtkante (23) sowie wenigstens einen Teil der von der Lichtkante (23) begrenzten Lichtfläche (24) unter einem Winkel α zur Projektionsrichtung aufnimmt, wobei im Verwendungsfall die Lichtkante (23) auf die Sensorelemente (32) so abgebildet wird, daß ein von der lokalen Produkthöhe abhängiger Anteil jedes Sensorelements (32) durch die von der Lichtkante (23) begrenzte Lichtfläche (24) beleuchtet wird.

17. Anordnung nach Anspruch 16, dadurch gekennzeichnet, daß die Sensorelemente (32) der Triangulations-Zeilenkamera (21) ein großes Verhältnis von Länge zu Breite aufweisen und daß die Abbildung der Lichtkante (23) auf die Sensorelemente (32) durch eine nicht verzerrende Optik erfolgt.

18. Anordnung nach Anspruch 16, dadurch gekennzeichnet, daß die Abbildung der Lichtkante (23) auf die Sensorelemente (32) der Triangulations-Zeilenkamera (21) durch eine anamorphotische Optik erfolgt.

19. Anordnung nach einem der Ansprüche 16 bis 18, dadurch gekennzeichnet, daß die Triangulations-Zeilenkamera (21) für den Wellenlängenbereich empfindlich ist, in dem die Lichtkante (23) projiziert wird, und daß die Inspektionskamera (12) für diesen Wellenlängenbereich nicht empfindlich ist.

20. Anordnung nach einem der Ansprüche 16 bis 19, dadurch gekennzeichnet, daß die Inspektionskamera (12) eine Farbkamera ist und daß die Triangulations-Zeilenkamera (21) eine Schwarz-Weiß-Kamera ist.

21. Anordnung nach Anspruch 16, dadurch gekennzeichnet, daß eine Zeilenkamera vorgesehen ist, die abwechselnd als Inspektionskamera (12) und als Triangulationskamera (21) verwendet wird.

22. Anordnung nach einem der Ansprüche 16 bis 21, dadurch gekennzeichnet, daß das Bildverarbeitungssystem (15) eine Normierungsschaltung (40) enthält, welche die Ausgangssignale der Inspektionskamera (12) und der Triangulations-Zeilenkamera (21) empfängt und das Höhenbildsignal der Triangulations-Zeilenkamera (21) mit Hilfe des Helligkeitssignals der Inspektionskamera (12) so normiert, daß der Einfluß der Helligkeit der Produktoberfläche auf das Höhenbild kompensiert wird.

## Claims

1. A method for optical inspection of products (10) with the aid of electronic image processing, in which the products (10) arranged on a support (11) in a single layer are moved through the field of view of an inspection camera (12) which continuously takes images (16) of the products (10) and converts them into an electrical image signal which is processed in an image processing system (15) for obtaining quality characteristics of the products (10), characterized in that a height image of the products (10) is acquired by an image-forming triangulation system (20) and is converted into an electrical height image signal which is processed in the image processing system (15) for determining height-dependent features of shape of the products (10), that for obtaining a continuous height image a light bar (23) is projected onto the products (10) transversely to the direction of movement, that the image of the light bar (23) and of at least part of the lighted surface (24) defined by the light bar (23) is acquired by a triangulation line camera (21) at an angle to the direction of projection, and that the optical imaging of the light bar (23) onto the sensor elements (32) of the triangulation line camera (21) is effected such that throughout the range of height to be found of the products (10), the image of the light bar (23) is located on the sensor elements (32) and a portion of each sensor element (32) dependent on the local product height is illuminated by the lighted surface (24) defined by the light bar (23).

2. The method according to claim 1, characterized in that when a triangulation line camera (21) is used whose sensor elements (32) have a large length-to-width ratio, the optical imaging is performed free from distortion.

3. The method according to claim 1, characterized in that the optical imaging is performed anamorphotically.

4. The method according to any one of the claims 1 to 3, characterized in that for the projection of the light bar (23) a wavelength range is used to which only the triangulation line camera (21) is sensitive, whereas the inspection camera (12) employed for inspection of the product surface is not.

5. The method according to claim 4, characterized in that for the projection of the light bar (23) a wavelength range in the near infrared range is used.

6. The method according to any one of the preceding claims, characterized in that the optical paths of the rays of the triangulation camera (21) and of the inspection camera (12) are aligned such that both cameras cover the same region of the product surface.

7. The method according to claim 6, characterized in that the image of the same region of the product surface is divided up to the two cameras by optical beam splitters.

8. The method according to any one of the preceding claims, characterized in that the height image signal supplied by the triangulation line camera (21) is converted pixel by pixel by a calculating unit (41) in correspondence with the triangulation parameters in such a manner that the signal amplitude is directly proportional to the geometric height of the product (10) as related to the support (11).

9. The method according to claim 8, characterized in that the calculating unit (41) is formed by a storage table which contains the computing functions to be executed and is addressed by the digitized height image signals.

10. The method according to any one of the preceding claims, characterized in that a calculating unit (40), which receives the output signals of the inspection camera (12) and of the triangulation line camera (21), normalizes the height image signal of the triangulation line camera (21) with the aid of the brightness signal of the inspection camera (12) in such a manner that the influence of the brightness of the product surface on the height image is compensated.

11. The method according to any one of the preceding claims, characterized in that the edge contours of the individual products (10), which touch each other at least in part, are determined from the height image with the aid of known methods of edge extraction from half-tone images.

12. The method according to claim 11, characterized in that the image of each product (10) supplied by the inspection camera (12) is masked with the detected edge contour of the product (10) such that at the pixels corresponding to the edge contour it receives signal values by which the edge contours can be clearly recognized.

13. The method according to any one of the preceding claims, characterized in that depressions and/or holes in the upper sides of the products (10) are detected from the height image.

14. The method according to any one of the preceding claims, characterized in that the thickness of each product (10) is detected from the height image.

15. The method according to any one of the preceding claims, characterized in that the same camera is used for inspection and for triangulation, that the projection of the light bar (23) is switched on and off in rapid alternation, that the output signal of the camera is used as image signal for the surface inspection only when the projection is switched off, and that the height image is computed from the output signal of the camera only when the projection is switched on.

16. An arrangement for implementing the method according to any one of claims 1 to 15, comprising a support (11) on which the products (10) to be inspected are arranged in a single layer, an inspection camera (12) for taking images (16) of the products (10) when the latter are conveyed on the support (11) in relation to the inspection camera (12) and for converting the taken images (16) into an electrical image signal, an image processing system (15) receiving the electrical image signal from the inspection camera (12) and processing it for obtaining quality characteristics of the products (10), characterized in that an image-forming triangulation system (20) is provided which, in case of use, acquires height images of the products (10) and converts them into an electrical height image signal supplied to the image processing system (15) which is designed such that it processes the height image signal for determining height-dependent features of shape of the products (10), that the triangulation system (20) comprises a projector (22) which, in case of use, projects a light bar (23) onto the products (10) transversely to the direction of conveyance, and also a triangulation line camera (21) which has sensor elements (32) associated with the pixels of an image line and takes the light bar (23) and at least part of the lighted surface (24) defined by the light bar (23) at an angle α to the direction of projection, the light bar (23) being imaged onto the sensor elements (32) in case of use such that a portion of each sensor element (32) dependent on the local height of the product is illuminated by the lighted surface (24) defined by the light bar (23).

17. The arrangement according to claim 16, characterized in that the sensor elements (32) of the triangulation line camera (21) have a large length-to-width ratio and that the imaging of the light bar (23) onto the sensor elements (32) is effected by a non-distorting lens system.

18. The arrangement according to claim 16, characterized in that the imaging of the light bar (23) onto the sensor elements (32) of the triangulation line camera (21) is effected by an anamorphotic lens system.

19. The arrangement according to any one of claims 16 to 18, characterized in that the triangulation line camera (21) is sensitive to the wavelength range in which the light bar (23) is projected, and that the inspection camera (12) is not sensitive to this wavelength range.

20. The arrangement according to any one of claims 16 to 19, characterized in that the inspection camera (12) is a colour camera and that the triangulation line camera (21) is a black and white camera.

21. The arrangement according to claim 16, characterized in that a line camera is provided which is used alternatingly as inspection camera (12) and as triangulation camera (21).

22. The arrangement according to any one of claims 16 to 21, characterized in that the image processing system (15) includes a normalizing circuit (40) which receives the output signals of the inspection camera (12) and of the triangulation line camera (21) and normalizes the height image signal of the triangulation line camera (21) with the aid of the brightness signal of the inspection camera (12) in such a manner that the influence of the brightness of the product surface on the height image is compensated.

## Revendications

1. Procédé pour l'inspection optique de produits (10) à l'aide du traitement électronique d'images, dans lequel les produits (10) disposés en une seule couche sur un support (11) sont déplacés à travers le champ d'image d'une caméra d'inspection (12) qui enregistre en continu des images (16) des produits (10) et les convertit en un signal électrique d'image qui est traité dans un système de traitement d'images (15) pour obtenir des caractéristiques de qualité des produits (10), caractérisé en ce qu'une image de hauteur des produits (10) est détectée par un système de triangulation (20) formant image et est convertie en un signal électrique d'image de hauteur qui est traité dans le système de traitement d'images (15) pour déterminer des caractéristiques de forme des produits (10) dépendantes de la hauteur, en ce que pour obtenir une image de hauteur continue, on projette une arête lumineuse (23) sur les produits (10) perpendiculairement à la direction de déplacement, en ce que l'image de l'arête lumineuse (23) et d'une partie de la surface lumineuse (24) définie par l'arête lumineuse (23) est enregistrée par une caméra de triangulation à balayage horizontal (21) sous un angle par rapport à la direction de projection, et en ce que la représentation optique de l'arête lumineuse (23) sur les éléments capteurs (32) de la caméra de triangulation à balayage horizontal (21) se fait de telle sorte que dans toute la zone de hauteur apparaissante des produits (10), l'image de l'arête lumineuse (23) se trouve sur les éléments capteurs (32), et une portion de chaque élément capteur (32), laquelle dépend de la hauteur locale du produit, soit éclairée par la surface lumineuse (24) définie par l'arête lumineuse (23).

2. Procédé selon la revendication 1, caractérisé en ce que lors de l'utilisation d'une caméra de triangulation à balayage horizontal (21) dont les éléments capteurs (32) présentent un rapport important de longueur sur largeur, la représentation optique se fait sans distorsion.

3. Procédé selon la revendication 1, caractérisé en ce que la représentation optique s'effectue par voie anamorphotique.

4. Procédé selon l'une quelconque des revendications 1 à 3, caractérisé en ce que pour la projection de l'arête lumineuse (23), on utilise une plage de longueur d'ondes à laquelle seule la caméra de triangulation à balayage horizontal (21) est sensible, mais non pas la caméra d'inspection (12) utilisée pour l'inspection de la surface des produits.

5. Procédé selon la revendication 4, caractérisé en ce que pour la projection de l'arête lumineuse (23), on utilise une plage de longueur d'ondes dans le domaine de l'infrarouge proche.

6. Procédé selon l'une quelconque des revendications précédentes, caractérisé en ce que les trajets optiques des rayons de la caméra de triangulation (21) et de la caméra d'inspection (12) sont alignés de telle sorte que les deux caméras enregistrent la même zone de la surface des produits.

7. Procédé selon la revendication 6, caractérisé en ce que l'image de la même zone de la surface des produits est répartie sur les deux caméras par des séparateurs de rayons.

8. Procédé selon l'une quelconque des revendications précédentes, caractérisé en ce que le signal d'image de hauteur fourni par la caméra de triangulation à balayage horizontal (21) est converti point d'image par point d'image par une unité de calcul (41) en correspondance des paramètres de triangulation, de telle manière que l'amplitude du signal est directement proportionnelle à la hauteur géométrique du produit (10) par rapport au support (11).

9. Procédé selon la revendication 8, caractérisé en ce que l'unité de calcul (41) est formée par un tableau mémoire qui est chargé des fonctions de calcul à effectuer et qui est adressé par les signaux numérisés d'image de hauteur.

10. Procédé selon l'une quelconque des revendications précédentes, caractérisé en ce qu'au moyen d'une unité de calcul (40) qui reçoit les signaux de sortie de la caméra d'inspection (12) et de la caméra de triangulation à balayage horizontal (21), le signal d'image de hauteur de la caméra de triangulation à balayage horizontal (21) est normalisé de telle sorte à l'aide du signal de luminance de la caméra d'inspection (12), que l'influence de la luminance de la surface de produit sur l'image de hauteur soit compensée.

11. Procédé selon l'une quelconque des revendications précédentes, caractérisé en ce que l'on détermine à partir de l'image de hauteur, à l'aide de procédés connus de l'extraction d'arête à partir d'images à valeurs de gris, les contours de bord des produits individuels (10) qui se touchent du moins en partie.

12. Procédé selon la revendication 11, caractérisé en ce que l'image de chaque produit (10) fournie par la caméra d'inspection (12) est masquée avec le contour de bord détecté du produit (10) de telle manière qu'elle reçoit aux points d'image correspondant au contour de bord, des valeurs de signal qui laissent reconnaître clairement les contours de bord.

13. Procédé selon l'une quelconque des revendications précédentes, caractérisé en ce que l'on détecte à partir de l'image de hauteur des creux et/ou des trous dans les faces supérieures des produits (10).

14. Procédé selon l'une quelconque des revendications précédentes, caractérisé en ce que l'on détecte à partir de l'image de hauteur l'épaisseur de chaque produit (10).

15. Procédé selon l'une quelconque des revendications précédentes, caractérisé en ce que l'on utilise la même caméra pour l'inspection et pour la triangulation, en ce que la projection de l'arête lumineuse (23) est activée et désactivée en alternance rapide, en ce que l'on utilise le signal de sortie de la caméra comme signal d'image pour l'inspection superficielle uniquement lorsque la projection est désactivée, et en ce que l'on calcule l'image de hauteur à partir du signal de sortie de la caméra uniquement lorsque la projection est activée.

16. Agencement pour mettre en oeuvre le procédé selon l'une quelconque des revendications 1 à 15, comportant un support (11) sur lequel sont disposés en une seule couche les produits (10) à inspecter, une caméra d'inspection (12) pour enregistrer des images (16) des produits (10) lorsque ceux-ci sont déplacés par rapport à la caméra d'inspection (12) sur le support (11), et pour convertir les images enregistrées (16) en un signal d'image électrique, un système de traitement d'images (15) qui reçoit le signal d'image électrique de la caméra d'inspection (12) et qui le traite pour obtenir des caractéristiques qualitatives des produits (10), caractérisé en ce qu'il existe un système de triangulation (20) formant image qui, en cas d'application, enregistre des images de hauteur des produits (10) et les convertit en un signal d'image de hauteur électrique qui est amené au système de traitement d'images (15) qui est réalisé de manière à traiter le signal d'image de hauteur pour déterminer des caractéristiques de forme des produits (10) dépendantes de la hauteur, en ce que le système de triangulation (20) comporte un projecteur (22) qui, en cas d'application, projette une arête lumineuse (23) transversalement à la direction de déplacement sur les produits (10), ainsi qu'une caméra de triangulation à balayage horizontal (21) comportant des éléments capteurs (32) associés aux points d'image d'une ligne de balayage, laquelle enregistre l'arête lumineuse (23) ainsi qu'au moins une partie de la surface lumineuse (24) définie par l'arête lumineuse (23) sous un angle α par rapport à la direction de projection, l'arête lumineuse (23) étant représentée sur les éléments capteurs (32) en cas d'application de telle sorte qu'une portion de chaque élément capteur (32), laquelle dépend de la hauteur locale du produit, soit éclairée par la surface lumineuse (24) définie par l'arête lumineuse (23).

17. Agencement selon la revendication 16, caractérisé en ce que les éléments capteurs (32) de la caméra de triangulation à balayage horizontal (21) présentent une relation importante de la longueur par rapport à la largeur, et en ce que la représentation de l'arête lumineuse (23) sur les éléments capteurs (32) se fait par une optique sans distorsion.

18. Agencement selon la revendication 16, caractérisé en ce que la représentation de l'arête lumineuse (23) sur les éléments capteurs (32) de la caméra de triangulation à balayage horizontal (21) s'effectue par une optique anamorphotique.

19. Agencement selon l'une quelconque des revendications 16 à 18, caractérisé en ce que la caméra de triangulation à balayage horizontal (21) est sensible à une plage de longueur d'ondes dans laquelle est projetée l'arête lumineuse (23), et en ce que la caméra d'inspection (12) n'est pas sensible à cette plage de longueur d'ondes.

20. Agencement selon l'une quelconque des revendications 16 à 19, caractérisé en ce que la caméra d'inspection (12) est une caméra couleurs, et en ce que la caméra de triangulation à balayage horizontal (21) et une caméra noir et blanc.

21. Agencement selon la revendication 16, caractérisé en ce qu'il est prévu une caméra à balayage horizontal qui est utilisée en alternance comme caméra d'inspection (12) et comme caméra de triangulation (12).

22. Agencement selon l'une quelconque des revendications 16 à 21, caractérisé en ce que le système de traitement d'images (15) comprend un circuit de normalisation (40) qui reçoit les signaux de sortie de la caméra d'inspection (12) et de la caméra de triangulation à balayage horizontal (21) et qui normalise le signal d'image de hauteur de la caméra de triangulation à balayage horizontal (21) à l'aide du signal de luminance de la caméra d'inspection (12), de telle sorte que l'influence de la luminance de la surface de produit sur l'image de hauteur soit compensée.
